# EUROPEAN PATENT APPLICATION

(11) **EP 2 503 171 A2**
(43) Date of publication of application: **26.09.2012**
(21) Application number: 12159562.3
(22) Date of filing: 15.03.2012
(51) Int. Cl.: F16D 7/02

(54) **Load coupling for power generation systems**

(30) Priority: 21.03.2011 US 201113052422
(71) Applicant: General Electric Company, Schenectady, NY 12345 (US)
(72) Inventor: Graham, Nicholas Simon, Greenville, SC South Carolina 29615 (US); Dimascio, Paul Stephen, Greenville, SC South Carolina 29615 (US); Bucci, David Vincent, Greenville, SC South Carolina 29615 (US)
(74) Representative: Cleary, Fidelma

(57) **Abstract**

A load coupling (20) for transmitting a torque load between a first shaft (14) and a second shaft (18) is disclosed. The load coupling (20) may generally include a first shaft segment (26) configured to be fixedly attached to the first shaft (14) and a second shaft segment (28) configured to be fixedly attached to the second shaft (18). The second shaft segment (28) may be frictionally fit within the first shaft segment (26) such that a frictional interface is defined between the first and second shaft segments (26, 28). Additionally, the frictional interface may be configured such that the first and second shaft segments (26, 28) rotationally disengage when the torque load exceeds a torque threshold and rotationally reengage when the torque load is reduced to or below the torque threshold.

## Description

### FIELD OF THE INVENTION

The present subject matter relates generally to load couplings for transmitting torque loads between shafts and, more particularly, to a load coupling for a power generation system designed to prevent both the transmission of excessive torque loads and the occurrence of overspeed conditions in the connected equipment of the system.

### BACKGROUND OF THE INVENTION

Power generation systems typically include a torque producing apparatus (e.g., gas turbines, steam turbines and/or other rotary engines) coupled to a generator through a shafting system. For example, in direct drive gas turbine systems, the gas turbine may include a rotor shaft coupled to a corresponding shaft of the generator. Such shafts are typically coupled to one another through a rigid load coupling, with one end of the load coupling being fixedly attached to the rotor shaft and the other end being fixedly attached to the generator shaft. Thus, torque loads applied to the rotor shaft may be transmitted through the load coupling to the generator shaft.

In rare instances, transient torsional events occur within power generation systems that can result in overload torques (i.e., torque peaks that are significantly larger than the normal operating torque loads of the system) being transmitted through the system's shafts and load coupling. For example, transient torsional events may occur when the electrical equipment within the generator short circuits. In addition, transient torsional events may occur when the generator is out-of-phase while being synced to the electrical grid.

To accommodate such torsional events, load couplings have been designed that release the torque carrying capabilities of the shafts when overload torques occur. For example, load couplings are known that include shear sections designed to fracture or break when torque loads become excessive, thereby allowing the shafts to rotate relative to one another. However, such decoupling of the shafts can lead to overspeed conditions of the connected equipment within the power generation system. For example, when the generator shaft is decoupled from the rotor shaft in a gas turbine system, the generator inertia is no longer available to limit the speed of the gas turbine, which can result in rotor bust as the gas turbine reaches operational speeds in excess of the speeds at which the turbine's components are designed to operate.

Accordingly, a load coupling that is configured to rotationally disengage coupled shafts when excessive torque loads occur and rotationally reengage such shafts when torque loads return to normal operating levels would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present invention resides in a load coupling for transmitting a torque load between a first shaft and a second shaft. The load coupling may generally include a first shaft segment configured to be fixedly attached to the first shaft and a second shaft segment configured to be fixedly attached to the second shaft. The second shaft segment may be frictionally fit within the first shaft segment such that a frictional interface is defined between the first and second shaft segments. Additionally, the frictional interface may be configured such that the first and second shaft segments rotationally disengage when the torque load exceeds a torque threshold and rotationally reengage when the torque load is reduced to or below the torque threshold.

The load coupling may generally include a coupling shaft having the first shaft segment the first shaft segment and the second shaft segment and may also include a shear feature formed in the coupling shaft between the first and second shaft segments. The shear feature may be configured to fail when the torque load exceeds a torque threshold. Additionally, the load coupling may include a support shaft extending axially within the coupling shaft so as to provide radial support to at least one of the first shaft segment and the second shaft segment when the shear feature fails. The support shaft may be frictionally fit within the coupling shaft such that a frictional interface is defined between the support shaft and at least one of the first shaft segment and the second shaft segment.

In a further aspect, the present invention resides in a power generation system including a first shaft, a second shaft and a load coupling as described above.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 illustrates a simplified view of one embodiment of a power generation system in accordance with aspects of the present subject matter;
FIG. 2 illustrates a cross-sectional view of one embodiment of a load coupling suitable for use within the disclosed power generation system in accordance with aspects of the present subject matter;
FIG. 3 illustrates a cross-sectional view of another embodiment of a load coupling suitable for use within the disclosed power generation system in accordance with aspects of the present subject matter; and
FIG. 4 illustrates a cross-sectional view of a further embodiment of a load coupling suitable for use within the disclosed power generation system in accordance with aspects of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter discloses a load coupling for transmitting torque loads between shafts. For example, in several embodiments, the load coupling may be utilized within a power generation system and may be configured to transmit torque between a rotor shaft of a torque producing apparatus and a generator shaft of a corresponding generator. Additionally, the load coupling may be configured to prevent both the transmission of excessive torque loads between the coupled shafts and the occurrence of overspeed conditions within connected components of the system (e.g., the torque producing apparatus and/or the generator). For instance, in one embodiment, the load coupling may include separate shaft segments frictionally coupled to one another such that the shaft segments rotationally disengage when torque loads exceed a torque threshold and rotationally reengage when torque loads are reduced to or below the torque threshold. In another embodiment, the load coupling may include a coupling shaft having a shear feature configured to fail when torque loads exceed a torque threshold and a support shaft configured to frictionally engage one or more portions of the coupling shaft after such failure.

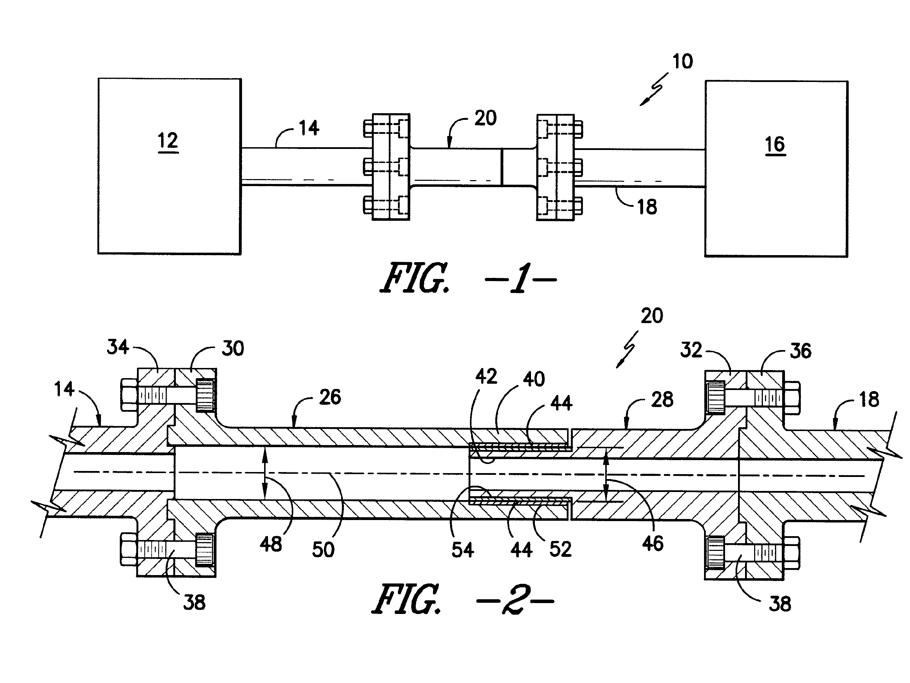

Referring now to FIG. 1, there is illustrated a simplified view of one embodiment of a power generation system 10 in accordance with aspects of the present subject matter. As shown, the power generation system 10 generally includes a torque producing apparatus 12 configured to generate rotational mechanical energy applied as a torque load through a rotor shaft 14. In several embodiments, the torque producing apparatus 12 may comprise a turbine, such as a gas turbine or a steam turbine. However, in other embodiments, the torque producing apparatus 12 may comprise any other suitable rotary engine and/or other engines/machines designed to produce a torque load.

The power generation system 10 may also include a generator 16 configured to convert the rotational mechanical energy produced by the torque producing apparatus 12 into electrical energy. Thus, in several embodiments, the generator 16 may include a generator shaft 18 coupled to the rotor shaft 14 through a load coupling 20. Specifically, as shown, the load coupling 20 may be fixedly attached to the rotor shaft 14 at one end and fixedly attached to the generator shaft 18 at the other end. As such, the torque applied through the rotor shaft 14 may be transmitted through the load coupling 20 and into the generator shaft 18 for subsequent conversion into electrical energy by the generator 16.

Referring now to FIG. 2, there is illustrated a cross-sectional view of one embodiment of the load coupling 20 shown in FIG. 1. As shown, the load coupling 20 generally includes a first shaft segment 26 and a second shaft segment 28. Each shaft segment 26, 28 may generally comprise a hollow, tubular member having a substantially circular cross-sectional shape. However, in other embodiments, the shaft segments 26, 28 may be solid or substantially solid and may have any other suitable cross-sectional shape. Additionally, the shaft segments 26, 28 may generally be formed from any suitable material(s). For instance, in several embodiments, the shaft segments 26, 28 may be formed from various different steels (e.g., AISI 4340 and NiCrMoV alloys) and/or various different nickel-based superalloys (e.g., IN706 and IN718).

In general, each shaft segment 26, 28 may be configured to be fixedly attached to either the rotor shaft 14 or the generator shaft 18. For example, in several embodiments, the first and second shaft segments 26, 28 may include radially extending flanges 30, 32 for attaching each shaft segment 26, 28 to a corresponding flange 34, 36 of either the rotor shaft 14 or the generator shaft 18. Specifically, as shown in FIG. 2, the first shaft segment 26 may include a first flange 30 configured to be fixedly attached to a corresponding rotor flange 34 of the rotor shaft 14. Similarly, the second shaft segment 28 may include a second flange 32 configured to be fixedly attached to a corresponding generator flange 36 of the generator shaft 18. In such an embodiment, the first and second flanges 30, 32 may generally be configured to be attached to the rotor and generator flanges 34, 36, respectively, using any suitable means known in the art. For instance, as shown in the illustrated embodiment, the flanges 30, 32, 34, 36 may define corresponding bolt hole patterns such that suitable mechanical fasteners 38 (e.g., bolts, pins, screws, clips, brackets, rivets and the like) may be utilized to secure the flanges 30, 32, 34, 36 together. In another embodiment, the flanges 30, 32, 34, 36 may be welded to one another or attached using any other suitable attachment means.

Additionally, the first and second shaft segments 26, 28 may also include first and second hub portions 40, 42, respectively, spaced axially apart from the flanges 30, 32. The hub portions 40, 42 of the shaft segments 26, 28 may generally be configured to be frictionally coupled to one another such that a frictional interface 44 exists between the shaft segments 26, 28. For example, in several embodiments, the first and second hub portions 40, 42 may be configured to be frictionally coupled to one another through a friction fit. As used herein, the terms "friction fit" and "frictionally fit" include interference fits, press fits and similar attachment methods wherein a first component is frictionally coupled to a second component through the frictional force generated between the components when one of the components is pressed into or otherwise received within the other component. For example, friction fits may be achieved by forcefully pressing a first component into a second component or by using thermal expansion/contraction methods wherein the first component is cooled and/or the second component is heated to permit the first component to be received within and frictionally coupled to the second component.

Thus, in several embodiments of the present subject matter, one of the shaft segments 26, 28 of the disclosed load coupling 20 may be configured to be pressed into or otherwise frictionally received within the other shaft segment 26, 28. For example, as shown in FIG. 2, the second shaft segment 28 may be dimensioned or otherwise configured so that the second hub portion 42 may be frictionally coupled within the first hub portion 40, such as by designing the second hub portion 42 as a recessed feature of the second shaft segment 26 having an outer diameter 46 that is slightly larger than the inner diameter 48 of the first hub portion 40. Accordingly, when the second hub portion 42 is installed within the first hub portion 40, a relatively high frictional force may be achieved at the frictional interface 44 defined between the inner perimeter of the first hub portion 40 and the outer perimeter of the second hub portion 42.

However, it should be appreciated that, in alternative embodiments, the first and second hub portions 40, 42 may generally have any other suitable configuration that allows the shaft segments 26, 28 to be frictionally fit within one another. For example, in one embodiment, the first shaft segment 26 may be dimensioned or otherwise configured so that the first hub portion 40 may be pressed into or otherwise frictionally received within the second hub portion 42.

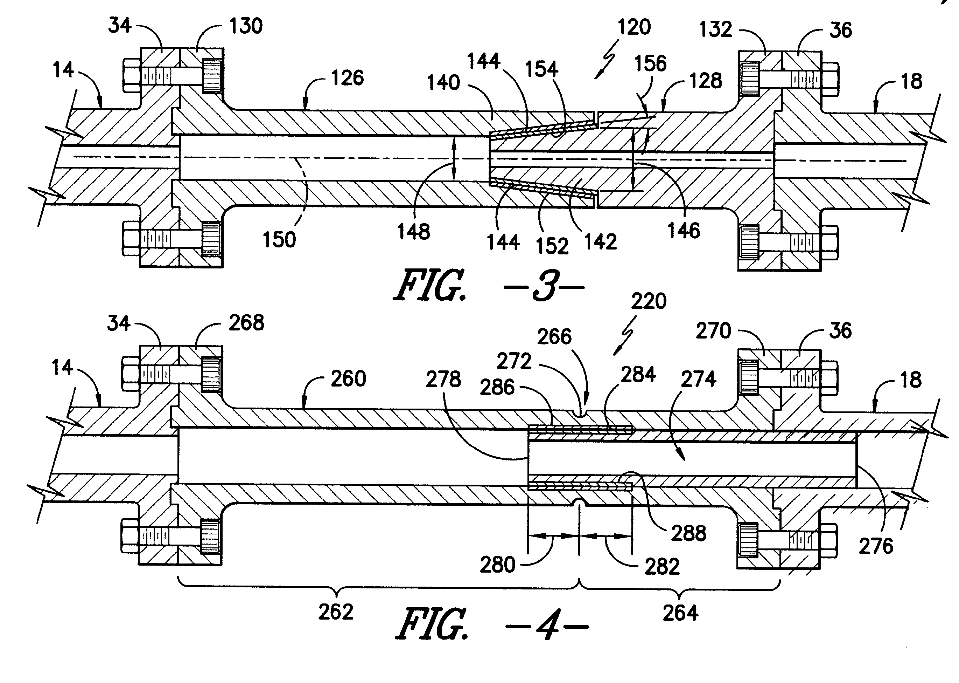

Moreover, in several embodiments, the first and second shaft segments 26, 28 may be concentrically arranged about a common axis 50. Thus, the first and second hub portions 40, 42 may generally be configured to have any suitable orientation and/or arrangement relative to the common axis 50. For example, as shown in FIG. 2, the hub portions 40, 42 are generally oriented substantially parallel to the common axis 50. As such, the frictional interface 44 defined between the hub portions 40, 42 may be oriented substantially parallel to the common axis 50 when the shaft segments 26, 28 are assembled together. However, in alternative embodiments, the first and second hub portions 40, 42 may have any other suitable orientation and/or arrangement relative to the common axis 50, as will be described below with reference to FIG. 3.

Further, in several embodiments, the first and second shaft segments 26, 28 may include controlled friction surfaces 52, 54 at the frictional interface 44 to provide a means for controlling the friction generated between the shaft segments 26, 28. For example, as shown in the illustrated embodiment, the first shaft segment 26 may include a first friction surface 52 defined around the inner perimeter of the first hub portion 40 and the second shaft segment 28 may include a second friction surface 54 defined around the outer perimeter of the second hub portion 42. Each friction surface 52, 54 may generally include a surface coating configured to increase/decrease the friction generated at the frictional interface 44 and/or enhance the material properties of the shaft segments 26, 28 at the frictional interface 44 (e.g., the strength, hardness and/or the wear resistance of the shaft segments 26, 28). Thus, suitable surface coatings may include, but are not limited to, known wear resistant coatings, textured surface coatings, and similar surface coatings. Additionally, in a particular embodiment of the present subject matter, the surface coatings applied to the friction surfaces 52, 54 may include, but are not limited to, coatings comprising one or more of the following materials: tungsten carbide (e.g., tungsten carbide in a ductile alloy matrix), titanium nitride, titanium carbide, chromium carbide (e.g., chromium carbide in a ductile alloy matrix), cobalt-chromium alloys (e.g., STELLITE) and cobalt-chromium-tungsten alloys (e.g., COAST METAL 64).

It should be appreciated that the surface coatings may generally be applied to the friction surfaces 52, 54 using any suitable application process known in the art. For example, suitable application processes may include, but are not limited to, plasma spraying processes, high velocity oxygen fuel (HVOF) spraying processes, cold spraying processes and weld overlaying processes.

Referring still to FIG. 2, the frictional interface 44 achieved by coupling the shaft segments 26, 28 together using a friction fit may generally be designed to prevent both the transmission of excessive torque loads between the shaft segments 26, 28 and the occurrence of overspeed conditions within the power generation system 10. For example, the shaft segments 26, 28 may be dimensioned or otherwise configured such that the friction fit generates enough friction at the frictional interface 44 to transmit torque loads that are less than or equal to a predetermined or designed torque threshold (e.g., normal operating torque loads). Thus, the shaft segments 26, 28 may be rotationally engaged at such torque loads to permit the transmission of torque between the rotor and generator shafts 14, 18. However, when torque loads exceed the torque threshold (e.g., an overload torque due to a transient torque event) so that the amount of torque that can be transmitted through friction is surpassed, the first and second shaft segments 26, 28 may rotationally disengage or slip relative to one another, thereby preventing excessive torque loads from being transmitted through the shaft segments 26, 28 and into the rotor shaft 14 and/or generator shaft 18.

Additionally, since the shaft segments 26, 28 are configured to slide relative to one another rather than being completely decoupled at excessive torque loads, the shaft segments 26, 28 may automatically reengage when the torque loads return to levels that can be transmitted through the friction present at the frictional interface 44 (i.e., torque loads at or below the torque threshold). As a result, the reengaged shaft segments 26, 28 may permit the reduced torque loads to be transmitted between the rotor and generator shafts 14, 18, thereby preventing overspeed of any of the connected components. For instance, by configuring the shaft segments 26, 28 to rotationally reengage when torque loads are reduced to or below the torque threshold, the inertia from the generator 16 may be transmitted through the load coupling 20 and into the rotor shaft 14 to prevent the torque producing apparatus 12 from reaching excessive operating speeds.

One of ordinary skill in the art should appreciate that the torque threshold at which the shaft segments 26, 28 are designed to rotationally disengage and reengage may generally vary depending on the particular application in which the disclosed load coupling 20 is being utilized. However, in one embodiment, the torque threshold may be chosen based upon the anticipated or typical torque loads within the power generation system 10. For example, the shafts segments 26, 28 may be frictionally coupled to one another such that the torque threshold corresponds to a torque load that is generally greater than the normal operating torque loads of the power generation system 10. In addition, the torque threshold may also be chosen based upon the load capabilities and other design tolerances of the shaft segments 26, 28, the rotor shaft 14, the generator shaft 18 and/or the connected components of the power generator system 10 (e.g., the torque producing apparatus 12 and/or the generator 16). For instance, the shafts segments 26, 28 may be frictionally coupled to one another such that the torque threshold includes a built-in safety factor to prevent torque loads that exceed the load capabilities of one or more of the components of the power generation system 10 from being transmitted through the shaft segments 26, 28.

Referring now to FIG. 3, there is illustrated a cross-sectional view of another embodiment of a load coupling 120 suitable for use with the disclosed power generation system 10 in accordance with aspects of the present subject matter. In general, the load coupling 120 may be configured similarly to the load coupling 20 described above with reference to FIG. 2 and, thus, may include many or all of the same components and/or features. Specifically, as shown, the load coupling 120 includes a first shaft segment 126 and a second shaft segment 128, with each shaft segment 126, 128 being configured to be fixedly attached to either the rotor shaft 14 or the generator shaft 18 of the power generation system 10. For example, as shown, the first shaft segment 126 may include a radially extending flange 130 configured to be fixedly attached to a corresponding flange 34 of the rotor shaft 14 and the second shaft segment 128 may include a radially extending flange 132 configured to be fixedly attached to a corresponding flange 36 of the generator shaft 14.

Additionally, the first and second shaft segments 126, 128 may include first and second hub portions 140, 142, respectively, configured to be frictionally fit to one another. For example, as shown in FIG. 3, the second hub portion 142 may be configured to be pressed into or otherwise received within the first hub portion 140 such that a frictional interface 144 is defined between the shaft segments. The shaft segments 126, 128 may also include controlled friction surfaces 152, 154 having a suitable surface coatings applied thereon. For instance, in the illustrated embodiment, the first shaft segment 126 may include a first friction surface 152 defined around the inner perimeter of the first hub portion 140 and the second shaft segment 128 may include a second contact surface 154 defined around the outer perimeter of the second hub portion 142.

Moreover, similar to the embodiments described with reference to FIG. 2, the first and second shaft segments 126, 128 may be dimensioned or otherwise configured such that the friction fit achieved between the shaft segments 126, 128 generates enough friction at the frictional interface 144 to transmit torque loads that are less than or equal to a torque threshold (e.g., normal operating torque loads), thereby permitting the shaft segments 126, 128 to be rotationally engaged. However, when torque loads exceed the torque threshold (e.g., due to a transient torque event), the shaft segments 126, 128 may temporarily rotationally disengage or slip relative to one another until the torque loads are reduced to a level at or below the torque threshold.

However, unlike the load coupling 20 described above, the illustrated hub portions 140, 142 generally include corresponding tapered profiles such that the frictional interface 144 is oriented at a taper angle 156 relative to a common axis 150 of the shaft segments 126, 128. Specifically, as shown, the first hub portion 126 is tapered radially outwardly at the frictional interface 144 such that the inner diameter 148 of the first hub portion 126 increases as the first shaft segment 126 extends axially in a direction away from the rotor shaft 14. Similarly, the second hub portion 142 is tapered radially inwardly at the frictional interface 144 such that the outer diameter 146 of the second hub portion 142 decreases as the second shaft segment 128 extends axially in a direction away from the generator shaft 18.

It should be appreciated that the taper angle 156 may generally comprise any suitable angle that permits a sufficient frictional force to be generated at the frictional interface 144 so that the shaft segments 126, 128 may be maintained in rotational engagement at torque loads at or below the torque threshold. Thus, one of ordinary skill in the art should appreciate that the range of suitable taper angles 156 may generally vary depending on the chosen torque threshold. However, in several embodiments, the taper angle 156 may be equal to less than about 15 degrees, such as less than about 10 degrees or less than about 5 degrees or less than about 2 degrees.

Referring now to FIG. 4, there is illustrated a cross-sectional view of a further embodiment of a load coupling 220 suitable for use with the disclosed power generation system 10 in accordance with aspects of the present subject matter. As shown, the load coupling 220 generally includes a coupling shaft 260 configured to be coupled between the rotor and generator shafts 14, 18 of the power generation system 10.

In general, the coupling shaft 260 may include a first shaft portion 262, a second shaft portion 264 and a shear feature 266 disposed between the first and second shaft portions 262, 264. As shown, the first shaft portion 262 may extend axially between the rotor shaft 14 and the shear feature 266 and the second shaft portion 264 may extend axially between the shear feature 266 and the generator shaft 18. Additionally, in several embodiments, the first and second shaft portions 262, 264 may be configured to be fixedly attached to the rotor and generator shafts 14, 18, respectively. For example, similar to the embodiments described above with reference to FIGS. 2 and 3, the first shaft portion 262 may include a first flange 268 configured to be fixedly attached to the rotor flange 34 of the rotor shaft 14 and the second shaft portion 264 may include a second flange 270 configured to be fixedly attached to the generator flange 36 of the generator shaft 18. However, in alternative embodiments, the shaft portions 262, 264 may generally have any other suitable configuration that allows the coupling shaft 260 to be fixedly attached between the rotor and generator shafts 14, 18.

The shear feature 266 of the coupling shaft 260 may generally be configured to facilitate failure of the coupling shaft 260 when the torque load required to be transmitted between the rotor and generator shafts 14, 18 exceeds a predetermined or designed torque threshold. In particular, the shear feature 266 may be configured to cause the coupling shaft 260 to fail at or adjacent to the shear feature 260, thereby separating the first shaft portion 262 from the second shaft portion 264. As a result of such failure, the coupling shaft 260 may generally prevent the transmission of overload torques between the rotor and generator shafts 14, 18.

In general, the shear feature 266 may comprise any suitable design feature(s) known in the art that may be utilized to introduce a structural weakness within the coupling shaft 260. For example, as shown in the illustrated embodiment, the shear feature 266 may comprise a circumferential groove 272 having suitable dimensions (e.g., an axial width and/or a radial depth) to facilitate failure of the coupling shaft 260 at the groove 272 in the event of excessive torque loads. However, in other embodiments, the shear feature 260 may comprise any other suitable design feature, such as a surface discontinuity, an internal cavity, a shear neck and/or a shear section.

It should be appreciated that, similar to the embodiments described above, the torque threshold at which the shear feature 260 is designed to fail may generally vary depending on the particular application in which the disclosed load coupling 220 is being utilized. However, in one embodiment, the torque threshold may be chosen based upon the anticipated or typical torque loads within the power generation system 10. For example, the shear feature 260 may be designed to fail at a torque load that is generally greater than the normal operating torque loads of the power generation system 10. In addition, the torque threshold may also be based upon the load capabilities and other design tolerances of the shaft coupling 260, the rotor shaft 14, the generator shaft 18 and/or the connected components of the power generator system 10 (e.g., the torque producing apparatus 12 and/or the generator 16).

Referring still to FIG. 4, the load coupling 260 may also include a support shaft 274 at least partially disposed within the coupling shaft 260. In general, the support shaft 274 may be configured to provide radial support to one or both of the first and second shaft portions 262, 264 when the shear feature 266 fails. Thus, in several embodiments, the support shaft 274 may be configured to extend within the coupling shaft 260 to a suitable axial location that permits both the first shaft portion 262 and the second shaft portion 264 to be radially supported about the support shaft 274. For example, as shown in the illustrated embodiment, the support shaft 274 may include a first end 276 mounted within the generator shaft 18 and a second end 278 extending within the first shaft portion 262 an axial distance 280 from the shear feature 266. As such, when the shear feature 266 fails and the coupling shaft 260 breaks between the first and second shaft portions 262, 264, both shaft portions 262, 264 may be supported radially by the support shaft 274. In an alternative embodiment, the first end 276 of the support shaft 274 may be configured to be mounted within the rotor shaft 14. In such an embodiment, the second end 278 of the support shaft 274 may be configured to extend axially within the second shaft portion 264 an axial distance 282 from the shear feature 266 such that the first and second shaft portions 262, 264 may be radially supported in the event of failure of the coupling shaft 260.

It should be appreciated that the first end 276 of the support member 274 may be configured to be mounted within the rotor shaft 14 or the generator shaft 18 using any suitable attachment means and/or method known in the art. For example, in one embodiment, the first end 276 may be welded to a portion of the rotor or generator shaft 14, 18 or the first end 276 may be retained within the rotor or generator shaft 14, 18 using suitable mechanical fasteners (e.g., bolts, screws, pins, clips, brackets and the like). In another embodiment, a friction fit may be utilized to mount the first end 276 of the support shaft 274 within the rotor or generator shaft 14, 18.

In addition to providing radial support to the first and/or second shaft portions 262, 264, the support shaft 274 may also be configured to prevent the occurrence of overspeed conditions within the power generation system 10. Specifically, in several embodiments, the support shaft 274 may be configured to be frictionally fit within the coupling shaft 260 such that a frictional interface 284 exists between the support shaft 274 and the coupling shaft 260. As such, when the shear feature 266 fails and the coupling shaft 260 breaks, the frictional engagement between the support shaft 274 and the first and/or second shaft portions 262, 264 may provide a means for continuing the transmission of torque loads between the rotor and generator shafts 14, 18. For example, as shown in the illustrated embodiment, a section of the inner perimeter of the first shaft portion 262 may be frictionally engaged with the support shaft 274, such as long the axial distance 280. Thus, when the coupling shaft 260 fails, a sufficient frictional force may be present between the support shaft 274 and the first shaft portion 262 to allow the transmission of torque between the rotor and generator shafts 14, 18, thereby resisting overspeed of the torque producing apparatus 12 of the power generation system 10.

Moreover, in several embodiments, the coupling shaft 260 and the support shaft 274 may include controlled friction surfaces 286, 288 at the frictional interface 284 to provide a means for controlling the friction generated between the support shaft 274 and the coupling shaft 260. For example, in the illustrated embodiment, a first friction surface 286 may be defined around the inner perimeter of coupling shaft 260, such as around sections of the inner perimeters the first and second portions 262, 264 at a location proximal to the shear feature 266. Similarly, a second friction surface 288 may be defined around the outer perimeter of the support shaft 274. Additionally, similar to the embodiments described above, each friction surface 286, 288 may generally include a surface coating configured to increase/decrease the friction generated at the frictional interface 284 and/or enhance the material properties of the coupling shaft 260 and/or support shaft 274 at the frictional interface 284 (e.g., the strength, hardness and/or the wear resistance of the shafts 260, 274). For example, suitable surface coatings may include, but are not limited to, coatings comprising one or more of the following materials: tungsten carbide (e.g., tungsten carbide in a ductile alloy matrix), titanium nitride, titanium carbide, chromium carbide (e.g., chromium carbide in a ductile alloy matrix), cobalt-chromium alloys (e.g., STELLITE) and cobalt-chromium-tungsten alloys (e.g., COAST METAL 64).

It should be appreciated that the frictional engagement provided between the support shaft 274 and the coupling shaft 260 may be designed similarly to the frictional engagement provided between the first and second shaft segments 26, 28 described above with reference to FIG. 2. For example, upon failure of the shear feature 266, the support shaft 274 may be frictionally engaged with the first shaft portion 262 and/or the second shaft portion 264 so that the support shaft 274 and first and/or second shaft portions 262, 264 are rotationally engaged at normal operating torques. However, when the operating torques increase (e.g., due to a transient torsional event), the support shaft 274 and the first and/or second shaft portions 260, 262 may rotationally disengage or slip relative to one another until such torque loads subsequently decrease.

Additionally, it should be appreciated by those ordinary skill in the art, that although the present subject matter is generally described herein with reference to a power generation system 10, the disclosed load couplings 20, 120, 220 may generally be utilized in any suitable shafting system in which torque is being transmitted between coupled shafts.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A load coupling (20) for transmitting a torque load between a first shaft (14) and a second shaft (18), the load coupling (20) comprising:
a first shaft segment (26) configured to be fixedly attached to the first shaft (14); and
a second shaft segment (28) configured to be fixedly attached to the second shaft (18), said second shaft segment (28) being frictionally fit within said first shaft segment (26) such that a frictional interface (44) is defined between said first and second shaft segments (26, 28),
wherein said frictional interface (44) is configured such that said first and second shaft segments (26, 28) rotationally disengage when the torque load exceeds a torque threshold and rotationally reengage when the torque load is reduced to or below said torque threshold.

2. The load coupling (20) of claim 1, wherein said first and second shaft segments (26, 28) are concentrically arranged about a common axis (50).

3. The load coupling (20) of claim 2, wherein said frictional interface (44) is oriented substantially parallel to said common axis (50).

4. The load coupling (20) of claim 2, wherein said frictional interface (44) is angled relative to said common axis (50).

5. The load coupling (20) of any of claims 1 to 4, wherein said first shaft segment (26) includes a first friction surface (52) at said frictional interface (44) and said second shaft segment (28) includes a second friction surface (54) at said frictional interface (44), said first and second friction surfaces (52, 54) including a surface coating.

6. The load coupling (20) of claim 5, wherein said surface coating includes at least one of tungsten carbide, titanium nitride, titanium carbide, chromium carbide, cobalt-chromium alloys and cobalt-chromium-tungsten alloys.

7. The load coupling (20) of any preceding claims further comprising:
a coupling shaft (260), including the first shaft segment (262) and the second shaft segment (264);
a shear feature (266) formed in said coupling shaft (260) between said first and second shaft segments (262, 264), said shear feature (266) being configured to fail when the torque load exceeds a torque threshold; and
a support shaft (274) extending axially within said coupling shaft (260) so as to provide radial support to at least one of said first shaft segments (262) and said second shaft segments (264) when said shear feature (266) fails,
wherein said support shaft (274) is frictionally fit within said coupling shaft (260) such that the frictional interface (284) is defined between said support shaft (274) and at least one of the first shaft segment (262) and the second shaft segment (264).

8. The load coupling (20) of claim 7, wherein said support shaft (274) includes a first end (276) fixedly attached to one of the first shaft (14) and the second shaft (18) and a second end (278) disposed within said coupling shaft (260).

9. The load coupling (20) of claim 7, wherein said frictional interface (284) is disposed axially at a location generally adjacent to said shear feature (266).

10. The load coupling (20) of claim 7, wherein said shear feature (266) comprises a circumferential groove (272) defined around an outer perimeter of said coupling shaft (260).

11. A power generation system (10), comprising:
a first shaft (14);
a second shaft (18); and
a load coupling (20) as recited in any preceding claim.

12. The power generation system (10) of claim 11, wherein said first shaft (14) is coupled to a torque producing apparatus (12) and said second shaft (18) is coupled to a generator (16).

13. The power generation system (10) of claim 12, wherein said torque producing apparatus comprises a gas turbine or a steam turbine.
